Europäisches Patentamt

European Patent Office

Office européen des brevets

(19)

(11) Numéro de publication: **0 127 717**
**B1**

(12) **FASCICULE DE BREVET EUROPEEN**

(45) Date de publication du fascicule du brevet: **14.10.87**

(21) Numéro de dépôt: **83401111.6**

(22) Date de dépôt: **02.06.83**

(51) Int. Cl.⁴: **G 05 D 16/06**, G 05 D 7/01 // F02C7/232

(54) Doseur de débit avec détecteur de perte de charge intégré.

(43) Date de publication de la demande:
**12.12.84 Bulletin 84/50**

(45) Mention de la délivrance du brevet:
**14.10.87 Bulletin 87/42**

(84) Etats contractants désignés:
**DE FR GB**

(56) Documents cités:
DE-A-2 100 404
FR-A-1 595 739
FR-A-2 180 484
FR-A-2 180 485
FR-A-2 201 403
FR-A-2 288 866
GB-A- 920 662
US-A-2 694 406
US-A-3 465 778
US-A-3 538 707

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **D'Agostino, Guy**
**1, rue Molière**
**F-94400 Vitry (FR)**
Inventeur: **Dhainaut, André**
**117 F Avenue Colonel Fabien**
**F-77190 Dammarie Les Lys (FR)**
Inventeur: **Maillard, Claude, Marcel Joseph**
**3, rue des Aubépines**
**F-77870 Vulaines sur Seine (FR)**

(74) Mandataire: **Moinat, François**
**S.N.E.C.M.A. Service des Brevets Boîte Postale 81**
**F-91003 Evry Cedex (FR)**

Courier Press, Leamington Spa, England.

## Description

L'invention concerne un ensemble de régulation à doseur de débit avec détecteur de perte de charge intégré.

On connaît notamment par les FR—A— 2 180 484 et FR—A—2 180 485 un ensemble de régulation comportant un doseur de débit de carburant à déplacement linéaire formé d'un piston susceptible de coulisser dans un fourreau présentant une chambre d'amont à la pression $P_1$ reliée au côté refoulement d'une pompe et une chambre d'aval à la pression $P_2$ reliée directement ou indirectement à une installation utilisatrice, ce piston comportant une section de dosage permettant de mettre en communication les deux chambres selon un passage de section contrôlée par le coulissement du piston, une soupape de régulation à déplacement linéaire formée d'un tiroir susceptible de coulisser dans un fourreau présentant une chambre d'amont et une chambre d'aval et conformé pour mettre en communication les deux chambres en réponse à un coulissement du tiroir provoqué par une modification de la perte de charge $P_1$—$P_2$ détectée par un détecteur de perte de charge, la chambre frontale aval de la soupape de régulation étant reliée à l'une, déterminée, des deux chambres du doseur de débit et la chambre frontale amont étant reliée à un point déterminé du circuit en fonction du type de pompe utilisé, de manière à maintenir constante la perte de charge $P_1$—$P_2$.

Dans les deux brevets cités, qi concernent une régulation principale, on utilise une pompe volumétrique qui débite un volume constant, et le rôle de la soupape régulatrice est, en réponse à la détection d'une augmentation de la perte de charge, de dériver l'excédent de carburant qui se trouve entre la pompe et le doseur afin de maintenir constante la perte de charge dans le doseur. On sait que c'est là une condition pour que le débit de carburant fourni aux injecteurs, lequel est proportionnel à la section de passage et à la racine carrée de la perte de charge, varie linéairement avec les déplacements du piston doseur (si la section du passage est proportionnelle au déplacement du piston).

On connaît dans le cadre de régulations postcombustion des ensembles du type précité utilisant une pompe centrifuge qui délivre une pression à peu près indépendante du débit. Dans ce cas, le maintien d'une perte de charge constante dans le doseur s'obtient en disposant la soupape régulatrice en série avec le doseur, de manière à créer un étranglement supplémentaire qui permet de jouer sur la pression amont ou aval du doseur et donc de rétablir, en réponse à une modification, la perte de charge à sa valeur prévue pour ce débit.

Par ailleurs, il a déjà été envisagé, notamment par le FR—A—2 288 866, de réaliser un ensemble de régulation comportant un doseur et un soupape régulatrice intégrée.

La présente invention vise à pousser plus loin le souci de miniaturisation de l'ensemble précité. Cu but est atteint, selon l'invention, du fait que le détecteur de perte de charge lui-même est logé à l'intérieur du piston doseur, dans un alésage prévu à cet.

Ainsi, l'ensemble de régulation de l'invention est du genre comportant un doseur de débit à déplacement linéaire formé d'un piston doseur susceptible de coulisser dans un fourreau présentant une chambre d'amont à la pression $P_1$ reliée au côté refoulement d'une pompe et une chambre d'aval à la pression $P_2$ reliée directement ou indirectement à une installation utilisatrice, le piston comportant une section de dosage permettant de mettre en communication les deux chambres selon un passage de section contrôlée par le coulissement du piston; une soupape de régulation à déplacement linéaire formée d'un tiroir, susceptible de coulisser dans un fourreau présentant une chambre respectivement à son amont et à son aval et conformé pour mettre respectivement en communication les deux chambres en réponse à un déséquilibre du tiroir, provoqué par une modification de la perte de charge $P_1$—$P_2$ détectée par un détecteur de perte de charge, la chambre frontale aval du fourreau de la soupape de régulation étant reliée à l'une, déterminée, des deux chambres du doseur de débit et la chambre frontale amont du fourreau de la soupape étant reliée à un point déterminé du circuit en fonction du type de pompe utilisé, de manière à maintenir constant la perte de charge $P_1$—$P_2$, le piston du doseur de débit formant le fourreau de la soupape à l'intérieur duquel est monté coulissant le tiroir de la soupape régulatrice. Cet ensemble se caractérise par la disposition, dans la même enceinte, des éléments principaux de la régulation de débit, à savoir: le piston doseur, la soupape régulatrice et le détecteur de perte de charge, ces deux derniers éléments étant logés bout à bout dans le piston doseur.

Selon l'invention, des passages sont prévus pour mettre en communication, en réponse à la détection d'une augmentation ou d'une diminution de la perte de charge $P_1$—$P_2$, soit la chambre d'aval à la pression $P_2$, soit la chambre d'amont à la pression $P_1$, avec l'une des chambres frontales, dite chambre modulée, du tiroir de la soupape régulatrice, laquelle chambre comporte un ressort de tarage, l'autre chambre frontale étant maintenue à la pression $P_1$.

Dans une forme de réalisation préférée, le détecteur de perte de charge comporte un carter logé dans l'alésage du piston doseur, à l'intérieur duquel peut coulisser un tiroir en réponse à la pression différentielle exercée entre deux enceintes, l'une reliée en permanence à la chambre d'amont à la pression $P_1$, l'autre reliée en permanence à la chambre d'aval à la pression $P_2$ et comportant un ressort de tarage, le déplacement du tiroir du détecteur entraînant la commutation de la communication entre la chambre modulée de la soupape régulatrice et l'une des deux chambres d'amont et d'aval.

Une extrémité du tiroir du détecteur coulisse dans une douille dans laquelle sont réalisés des

évidements qui coopèrent avec une gorge annulaire du tiroir pour réaliser ladite commutation de la communication.

L'invention sera mieux comprise grâce à la description suivante d'un mode particulier mais non limitatif de réalisation. Il sera fait référence aux dessins annexés, sur lesquels;

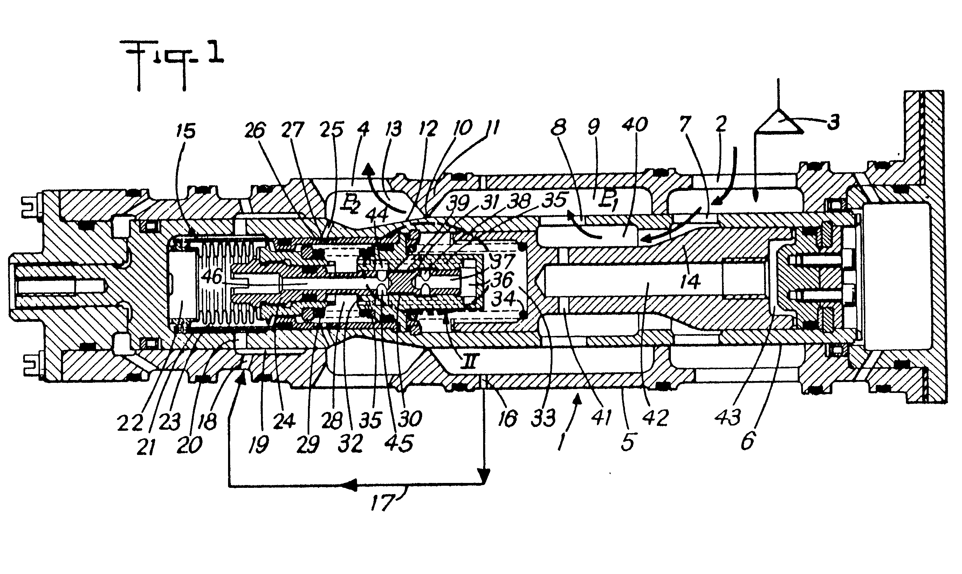

—la figure 1 est une coupe longitudinale de l'ensemble de régulation conforme à l'invention, adapté au cas d'une régulation de post-combustion;

—la figure 2 est un agrandissement du détail II de la figure 1, montrant mieux les éléments du tiroir du détecteur de perte de charge permettant la commutation de la pression dans la chambre modulée de la soupape régulatrice.

L'ensemble 1 est interposé entre une arrivée 2 de carburant refoulé par une pompe centrifuge 3 et une sortie 4 de ce carburant en direction d'une installation utilisatrice non représentée.

L'ensemble 1 comprend, dans un carter externe non représenté, le fourreau cylindrique 5 du doseur, à l'intérieur duquel est susceptible de coulisser le piston doseur 6.

le débit de la pompe centrifuge 3 est admis dans le piston doseur 6 par l'arrivée 2 du fourreau 5 puis par les passages 7 et 8 du piston doseur 6; il remplit la chambre d'amont 9 à la pression $P_1$, passe par l'orifice de dosage 10 constitué entre l'épaulement 11 du fourreau et la portée conique 12 du piston doseur 6, dans la chambre d'aval 13 à la pression $P_2$ et enfin par la sortie 4 avant d'aller alimenter les injecteurs non représentés.

Afin que le débit dosé varie linéairement avec la section de l'orifice de dosage 10, la différence de pression $P_1$—$P_2$ entre amont et aval de cet orifice est maintenue constante par le tiroir de la soupape régulatrice 14 coulissant dans le piston doseur 6 qui lui sert de fourreau et pour cela la soupape régulatrice étrangle plus ou moins l'arrivée de carburant par le passage 7, sa position étant asservie à une pression modulée élaborée dans le détecteur de perte de charge 15.

La pression $P_1$ en amont du piston doseur 6, c'est-à-dire la pression régnant dans la chambre d'amont 9, est transmise par le passage 16, une liaison extérieure 17, le passage 18, une chambre cylindrique 19 du fourreau 5, le passage 20 du piston doseur 6, la chambre 21 entourant le carter du détecteur de perte de charge 15, à l'enceinte avant 22 dudit détecteur de perte de charge 15, délimitée par le soufflet 23 et l'alésage du tiroir 24 du détecteur de perte de charge 15.

La pression $P_2$ en aval du piston doseur 6, c'est-à-dire la pression régnant dans la chambre d'aval 13, est transmise par un passage 25 du piston doseur 6, une gorge annulaire 26 et un passage 27 du carter du détecteur de perte de charge 15, à l'enceinte arrière 28 de celui-ci.

Un ressort de tarage 29 est calé dans l'enceinte arrière 28 contre le tiroir 24 pour assurer une perte de charge P donnée.

Si la pression $P_1$ en amont du piston doseur, et dans l'enceinte avant 22 du détecteur de perte de charge 15, augmente, le soufflet 23 se dilate et le tiroir 24 est repoussé vers la droite sur les figures.

Cette translation du tiroir 24 met en communication les gorges annulaires 30 du tiroir 24 et 31 de la douille 32 du détecteur de perte de charge dans laquelle coulisse le tiroir 24.

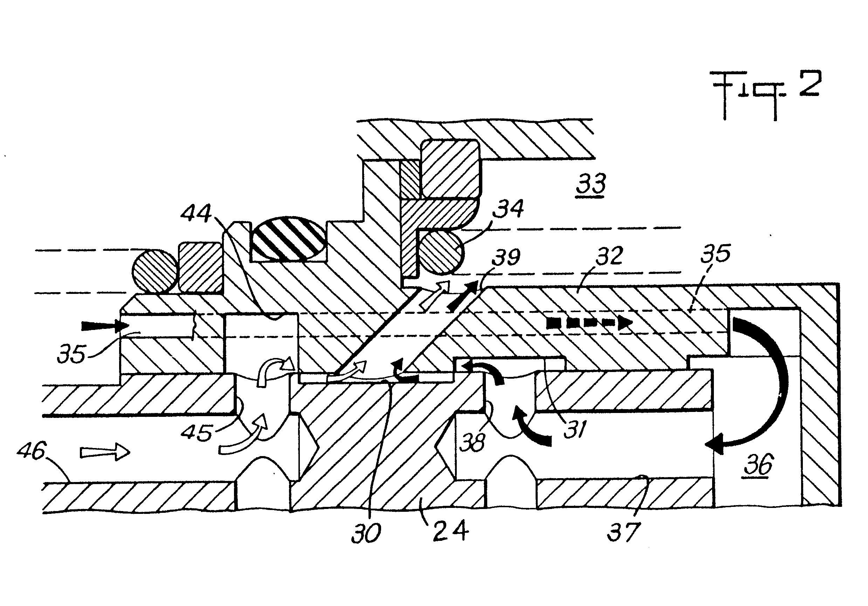

La pression $P_2$ en aval du piston doseur, et dans l'enceinte arrière 28 du détecteur de perte de charge 15, est alors transmise à la chambre frontale, dite chambre modulée 33 du tiroir de la soupape régulatrice comportant son ressort taré 34, par l'intermédiaire des canaux longitudinaux 35 percés dans la douille 32, la chambre du fond 36, l'alésage terminal 37 du tiroir 24, les passages radiaux 38 du tiroir 24, les gorges annulaires 31 et 30 qui sont en communication, puis les passages 39 reliant la gorge annulaire 30 à la chambre modulée 33. La transmission de la pression est symbolisée par les flèches noires de la figure 2.

La pression dans la chambre modulée 33 du tiroir de la soupape régulatrice étant ainsi la pression $P_2$ aval du piston doseur, inférieure à la pression amont $P_1$ règnant dans la chambre 9 du piston doseur, ainsi que dans l'évidement 40 du tiroir de soupape et via ses orifices 41 son alésage 42 dans la chambre frontale 43. Il s'ensuit que le tiroir de soupape 14 se déplace vers la gauche et étrangle le passage 7 de carburant: la chute de pression amont $P_1$ ainsi créée ramène la perte de charge P dans le piston doseur à sa valeur réglée.

Si inversement la pression amont $P_1$ diminue, la contraction du soufflet 23 entraîne le tiroir 24 du détecteur de perte de charge 15 vers la gauche, ce qui a pour effet de mettre en communication la gorge annulaire 30 du tiroir 24, les passages 44 de la douille 32, et les passages 45 du tiroir 24 reliant l'alésage principal 46 du tiroir 24. De ce fait, la pression $P_1$ règnant dans l'enceinte avant 22 est transmise (cf. flèches blanches, figure 2) via les éléments 45, 44, 30, 39 à la chambre modulée 33; le tiroir de soupape 14 est repoussé vers la droite et découvre le passage 7 jusqu'à rétablir la perte de charge P à sa valeur régulée.

L'invention vient d'être décrite dans le cadre d'une régulation de post-combustion. Il est bien entendu que l'invention s'applique aussi bien au cas d'une régulation principale.

**Revendications**

1. Ensemble de régulation comportant un doseur de débit de carburant à déplacement linéaire formé d'un piston doseur (6) susceptible de coulisser dans un fourreau (5) présentant une chambre d'amont (9) à la pression $P_1$ reliée au côté refoulement d'une pompe (3) et une chambre d'aval (13) à la pression $P_2$ reliée directement ou indirectement ù une installation utilisatrice, le piston doseur (6) comportant un orifice de dosage (10) permettant de mettre en communication les deux chambres (9, 13) selon un passage (10, 11) de section contrôlée par le coulissement du piston doseur (6); une soupape de régulation (14) à déplacement linéaire formée d'un tiroir, susceptible de coulisser dans un fourreau et conformé pour mettre en communication les deux chambres situées respectivement en amont (9) et an aval (13) en réponse à un déséquilibre du tiroir (14) provoqué par une modification de la perte de charge $P_1$—$P_2$ détectée par un détecteur de perte de charge (15), la chambre frontale aval (33) du fourreau de la soupape de régulation (14) étant reliée à l'une (9 ou 13), déterminée, des deux chambres (9, 13) du doseur de débit et la chambre frontale amont (43) du fourreau de la soupape de régulation (14) étant reliée à un point déterminé du circuit en fonction du type de pompe utilisé, de manière à maintenir constante la perte de charge $P_1$—$P_2$, le piston (6) du doseur de débit formant le fourreau de la soupape de régulation à l'intérieur duquel est monté coulissant le tiroir (14) de la soupape régulatrice, caractérisé en ce que le détecteur de perte de charge (15) est logé dans un alésage du piston doseur (6).

2. Ensemble selon la revendication 1, caractérisé en ce que le détecteur de perte de charge (15) et le tiroir de soupape régulatrice (14) sont logés aux deux extrémités longitudinalement opposées du piston doseur (6).

3. Ensemble selon l'une quelconque des revendications 1 ou 2, caractérisé en ce que des passages sont prévus pour mettre en communication, en réponse à la détection d'une augmentation ou d'une diminution de la perte de charge $P_1$—$P_2$, soit la chambre d'aval (13) à la pression $P_2$, soit la chambre d'amont (9) à la pression $P_1$, avec l'une des chambres frontales, dite chambre modulée (33), du tiroir de la soupape régulatrice (14), laquelle chambre modulée (33) comporte un ressort de tarage (34), l'autre chambre frontale (43) étant maintenue à la pression $P_1$.

4. Ensemble selon la revendication 3, caractérisé en ce que le détecteur de perte de charge (15) comporte un carter logé dans l'alésage du piston doseur (6), à l'intérieur duquel peut coulisser un tiroir (24) en réponse à la pression différentielle exercée entre deux enceintes, l'une (22) reliée en permanence à la chambre d'amont (9) à la pression $P_1$, l'autre (28) reliée en permanence à la chambre d'aval (13) à la pression $P_2$ et comportant un ressort de tarage (29), le déplacement du tiroir (24) du détecteur de perte de charge entraînant la commutation de la communication entre la chambre modulée (33) du tiroir de la soupape régulatrice (14) et l'une ou l'autre des deux chambres d'amont et d'aval (9 ou 13).

5. Ensemble selon la revendication 4, caractérisé en ce qu'une extrémité du tiroir (24) du détecteur de perte de charge (15) coulisse dans une douille (32) dans laquelle sont réalisés des évidements (31; 44) qui coopèrent avec une gorge annulaire (30) du tiroir (24) pour réaliser ladite commutation de la communication.

**Patentansprüche**

1. Regelungsanordnung
mit einem linear bewegbaren Kraftstoffdurchsatz-Dosierer, der von einem Dosierkolben (6) gebildet ist, der gleitbar in einer Hülse (5) angeordnet ist, die eine stromaufwärtige Kammer (9) mit dem Druck $P_1$ aufweist, die mit der Förderseite einer Pumpe (3) verbunden ist, und eine stromabwärtige Kammer (13) mit dem Druck $P_2$, die direkt oder indirekt mit einer Verbracheranordnung verbunden ist, wobei der Dosierkolben (6) eine Dosieröffnung (10) besitzt, die es ermöglicht, die beiden Kammern (9, 13) über einen Durchgang (10, 11) miteinander in Verbindung zu setzen, dessen Querschnitt durch das Verschieben des Dosierkolbens (6) gesteuert ist,
ferner mit einem Regelungsventil (14), das von einem in einer Hülse gleitbar angeordneten Schieber gebildet ist, der so geformt ist, daß der die beiden stromaufwärts bzw. stromabwärts gelegenen Kammern (9 bzw. 13) in Abhängigkeit von einer Unsymmetrie des Schiebers (14) miteinander in Verbindung setzen kann, die durch eine Änderung des von einem Druckabfall-Detektor (15) erfaßten Druckabfalls $P_1$—$P_2$ hervorgerufen wird,
wobei die stromabwärtige frontale Kammer (33) der Hülse des Regelungsventils (14) mit einer (9 oder 13) bestimmten der beiden Kammern (9, 13) des Durchsatzdosierers verbunden ist und die stromaufwärtige frontale Kammer (43) der Hülse des Regelungsventils (14) mit einem Punkt des Kreislaufs verbunden ist, der in Abhängigkeit von der Art der verwendeten Pumpe so bestimmt wird, daß der Druckabfall ($P_1$—$P_2$) konstant gehalten wird,
und wobei der Durchsatz-Dosierkolben (6) die Hülse des Regelungsventils bildet, in deren Inneren der Schieber (14) des Regelungsventils gleitbar montiert ist,
dadurch gekennzeichnet,
daß der Druckabfall-Detektor (15) in einer Bohrung des Dosierkolbens (6) aufgenommen ist.

2. Anordnung nach Anspruch 1, dadurch gekennzeichnet, daß der Druckabfall-Detektor (15) und der Schieber des Regelungsventils (14) an den beiden in Längsrichtung einander entgegengesetzten Enden des Dosierkolbens (6) angeordnet sind.

3. Anordnung nach Anspruch 1 oder 2, dadurch gekennzeichnet, daß Durchgänge vorgesehen sind, die in Abhängigkeit von der Erfassung einer Vergrößerung oder einer Verkleinerung des Druckabfalls ($P_1$—$P_2$) entweder die stromabwärtige Kammer (13), in der der Druck $P_2$ herrscht, oder die stromaufwärtige Kammer (9), in der der Druck $P_1$ herrscht, mit einer der frontalen Kammern des Schieber (14) des Regelungsventils, die als Modulationskammer (33) bezeichnet wird, verbinden, wobei diese Modulationskammer (33) eine Einstellfeder (34) aufweist, und die andere frontale Kammer (43) auf dem Druck $P_1$ gehalten wird.

4. Anordnung nach Anspruch 3, dadurch gekennzeichnet, daß der Druckabfall-Detektor (15) ein Gehäuse besitzt, das in der Bohrung des Dosierkolbens (6) aufgenommen ist und in dessen Innenraum ein Schieber (24) als Reaktion auf den zwischen zwei Räumen ausgeübten Differenzdruck gleiten kann, von denen der eine Raum (22) ständig mit der stromaufwärtigen Kammer (9) mit dem Druck $P_1$ verbunden ist, während der andere Raum (28) ständig mit der stromabwärtigen Kammer (13) mit dem Druck $P_2$ verbunden ist und eine Einstellfeder (29) aufweist, und wobei die Bewegung des Schiebers (24) des Druckabfall-Detektors die Umschaltung der Verbindung zwischen der Modulationskammer (33) des Schiebers des Regelungsventils (14) und der einen oder der anderen der beiden stromaufwärts bzw. stromabwärts gelegenen Kammern (9 oder 13) herbeiführt.

5. Anordnung nach Anspruch 4, dadurch gekennezeichnet, daß ein Ende des Schiebers (24) der Druckabfall-Detektors (15) in einer Buchse (32) gleitet, in der Ausnehmungen (31, 144) angebracht sind, die mit einer rinförmigen Kehle (30) des Schiebers (24) zusammenwirken, um die genannte Umschaltung der Verbindung durchzuführen.

**Claims**

1. Control assembly comprising a linear displacement fuel flow feed regulator formed by a feed regulator piston (6) capable of sliding in a sleeve (5) having an upstream chamber (9) at the pressure $P_1$ connected to the delivery side of a pump (3) and a downstream chamber (13) at the pressure $P_2$ connected directly or indirectly to a user installation, the feed regulator piston (6) comprising a metering orifice (10) enabling communication of the two chambers (9, 13) through a passage (10, 11) having a section controlled by the sliding of the feed regulator piston (6); a linear displacement control valve (14) formed by a slide, capable of sliding in a sleeve and arranged to place in communication the two chambers situated respectively upstream (9) and downstream (13) in response to imbalance of the slide (14) caused by a change in the pressure drop $P_1—P_2$ detected by a differential pressure detector (15), the downstream frontal chamber (33) of the control valve sleeve being connected to a particular one (9 or 13) of the two chambers (9, 13) of the flow feed regulator and the upstream frontal chamber (43) of the control valve sleeve being connected to a particular point of the circuit according to the type of pump used, in a manner such as to maintain constant the pressure drop $P_1—P_2$, the piston (6) of the flow feed regulator forming the sleeve of the control valve in the interior of which is slidably mounted the slide (14) of the control valve, characterised in that the differential pressure detector (15) is housed in a bore of the feed regulator piston (6).

2. Assembly according to claim 1, characterised in that the differential pressure detector (15) and the slide of the control valve (14) are housed in the two longitudinally opposite ends of the feed regulator piston (6).

3. Assembly according to claim 1 or claim 2, characterised in that passages are provided for placing in communication, in response to the detection of an increase or a decrease of the pressure drop $P_1—P_2$, either the downstream chamber (13) at the pressure $P_2$, or the upstream chamber (9) at the pressure $P_1$, with one of the frontal chambers, the so-called modulated chamber (33) of the control valve slide 14, which modulated chamber (33) comprises an adjustment spring (34), the other frontal chamber (43) being maintained at the pressure $P_1$.

4. Assembly according to claim 3, characterised in that the differential pressure detector (15) comprises a casing housed in the bore of the feed regulator piston (6), in the interior of which a slide (24) can slide in response to the differential pressure exerted between two enclosures, one (22) connected permanently to the upstream chamber (9) at the pressure $P_1$, and the other (28) connected permanently to the downstream chamber (13) at the pressure $P_2$ and having an adjustment spring (29), displacement of the differential pressure detector slide (24) switching the communication between the modulated chamber (33) of the control valve slide (14) and one or other of the upstream and downstream chambers (9 or 13).

5. Assembly according to claim 4, characterised in that one end of the slide (24) of the differential pressure detector (15) slides in a socket in which there are recesses which co-operate with an annular groove (30) of the slide (24) for effecting the said switching of communication.

0 127 717

Fig. 1

0 127 717

Fig 2